# EUROPEAN PATENT APPLICATION

(11) **EP 4 098 112 A1**
(43) Date of publication of application: **07.12.2022**
(21) Application number: 21204414.3
(22) Date of filing: 25.10.2021
(51) Int. Cl.: A01K 35/00

(54) **AVIAN GIRDLE**

(30) Priority: 01.06.2021 TW 110206337 U
(71) Applicant: Wu, Ming-Che, Nantou County 542 (TW)
(72) Inventor: Wu, Ming-Che, Nantou County 542 (TW)
(74) Representative: Straus, Alexander

(57) **Abstract**

An avian girdle comprises a frame, which includes a mounting part connecting a first assembly structure to a front section in a distance, and the front section linking between a rear section and a second assembly structure. When the avian girdle has been putting onto a bird for a flight practice, its mechanism distributes a counterweight from the mounting part, with equipment of a data collection device for collecting information on the back of the bird, and decreases the air resistance. Therefore, the bird can carry a heavier load than it does when wearing a foot ring, with unilateral configuration of a tracking device on one foot affecting bird's flying performance.

## Description

### BACKGROUND

### 1. Technical Field

This creation relates to an avian girdle, especially for an easy-to-wear device for birds to withstand a heavier load.

### 2. Related Art

For recording birds' flight trace, many tracking devices were deployed on a variety of foot rings by way of installment or attachment. However, by way of attachment, might put the tracking device at falling-off stake due to unconceivable contingencies resulting in an un-retrievable recording data.

Moreover, many birds were influenced by the uneven weight distribution caused by a unilateral configuration of the tracking device on foot ring.

### SUMMARY

Foreseeing the afore-mentioned defect, this creation aims to provides an avian girdle, especially for bird's wearing device, meeting the requirements of being deployed with a data collection device, withstanding a heavier load, complying with avian ergonomics and flight dynamic.

Based on the goals of this creation, the provided avian girdle comprises a frame including a mounting part. The mounting part acts as a saddle for deploying a data collection device and connects a first assembly structure to a front section in a distance. The front section has a pedestal for installing an image capture device. A rear section links between the front section and a second assembly structure, which contacts the first assembly structure in a detachable fashion.

The front section consists of a first connecting string and a second connecting string, both of them arraying in segregation and extending downward from the mounting part as a collar for bird's head passing through, the first connecting string linking to the first crooked string of the rear section and the second connecting string linking to the second crooked string of the rear section.

In some embodiment, the first crooked string and the second crooked string converge at a bottom rib away from the first and the second connecting strings, and the first crooked string and the second crooked string form roughly like a V shape.

In some embodiment, the tracking device is deployed on the mounting part by way of snapping or bonding.

In some embodiment, a first blade and a second blade are arranged at a relative position of the bottom rib and form an upward inclination.

In some embodiment, the second assembly structure extends upward from one end of the bottom rib. The second assembly structure consists of a third adjustable fastener and a fourth adjustable fastener, and both of them form an inclination.

In some embodiment, the first assembly structure consists of a first adjustable fastener and a second adjustable fastener, and both of them form an inclination. One of the fasteners serves as a series of mortises snapped up by the other one serving as a tenon.

In some embodiment, the data collection device is either a tracking device, image capture device or a controller.

### BRIEF DESCRIPTION OF THE DRAWINGS

FIG. 1 is a perspective view of an embodiment of this creation after assembly.
FIG. 2 is a perspective view of an embodiment of this creation before assembly.
FIG. 3 is another perspective view of an embodiment of this creation before assembly.
FIG. 4 is a perspective view of an embodiment of this creation in practice.

### DETAILED DESCRIPTION

In order to clearly specify the embodiment, structure and performance of this creation, the drawings are referred along with the narration accordingly.

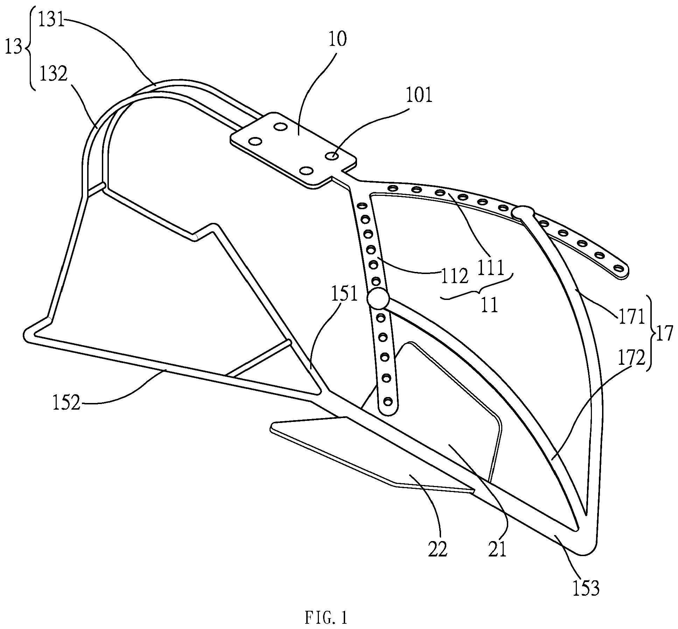

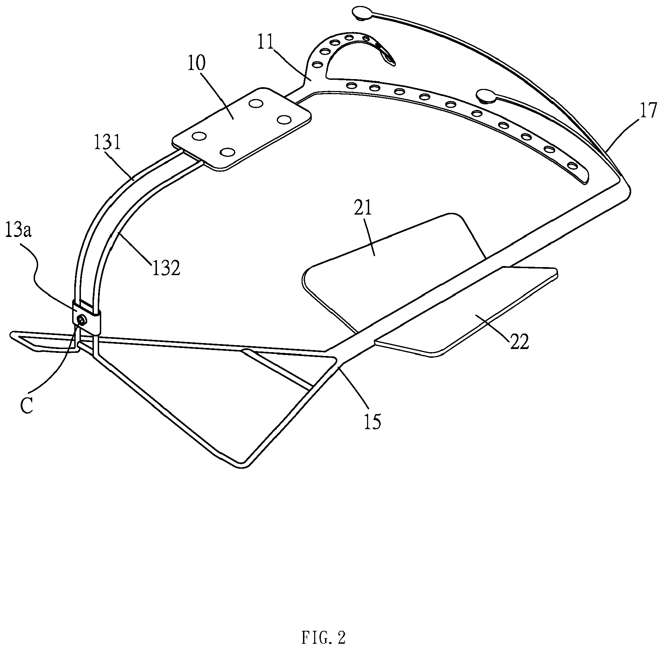

FIG. 1 and 2 illustrate an avian girdle comprises a frame includes a mounting part 10, the mounting part 10 acts as a saddle for deploying a tracking device A and connecting a first assembly structure 11 and a front section 13 in a distance. The front section 13 has a pedestal 13a for engaging with an image capture device C, the front section 13 linking a rear section 15 to a second assembly structure 17, and a support section locates on the bottom rib 153 of the rear section 15.

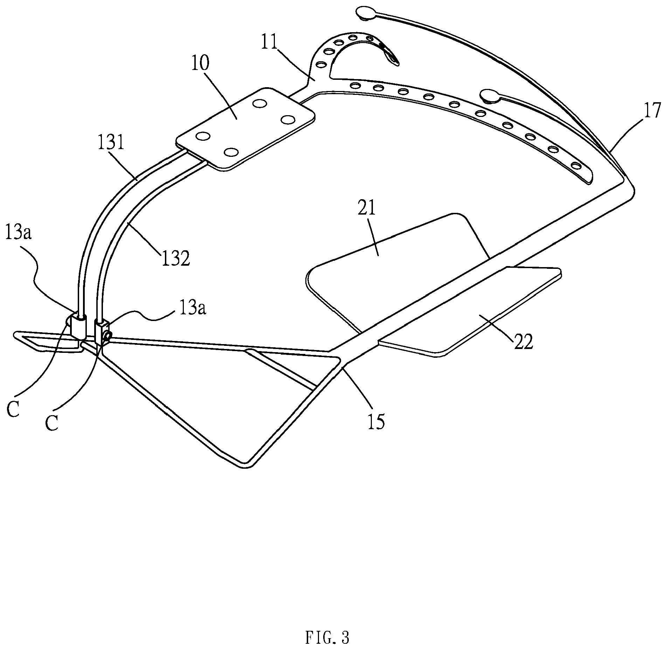

In some embodiment, the front section 13 has a first connecting string 131 and a second connecting string 132, both of them arraying in segregation and extending downward as a collar for bird's head passing through. Additionally, when a bird is wearing the avian girdle, the front section 13 has the pedestal 13a for engaging with the image capture device C in an adjustable fashion. In this way, the image capture device C can be rearranged to a more appropriate position around bird's throat or chest in help of keeping balance in flight. Shown as another embodiment in FIG. 3, both of the first and the second connecting strings 131, 132 are deployed with the pedestals 13a. In other words, there are two image capture devices C on the avian girdle for recording more flight image, and the weight of two image capture devices C on the bird's chest is distributed evenly having the advantage of a reduced influence on bird and keeps balance in flight.

The first connecting string 131 links to the first crooked string 151 of the rear section 15, and the second string 132 links to the second crooked string 152 of the rear section 15. Both of the first and the second crooked strings 151, 152 have one ends converge at the bottom rib 153 away from the first and the second connecting strings 131, 132. The first crooked string 151 and the second crooked string 152 form an upward inclination roughly like a V shape.

The first assembly structure 11 consists of a first adjustable fastener 111 and a second adjustable fastener 112. The first and the second adjustable fasteners 111, 112 form an inclination. In practice, the first adjustable fastener 111 extends downward from the bird's tail and so does the second adjustable fastener 112 but to a deviating direction in avoiding adverse event to the bird.

The second assembly structure 17 consists of the third adjustable fastener 171 and the fourth adjustable fastener 172. Both of the third and the fourth adjustable fasteners 171, 172 extend upward and form an inclination. The third adjustable fastener 171 and the fourth adjustable fastener 172 individually connect the first adjustable fastener 111 and the second fastener 112. Finally, putting the avian girdle onto bird's practice is on completion.

In some embodiment, the first assembly structure 11 arrays a series of mortises, and the second assembly structure 17 is a tenon. Both of them snap up in an adjustable fashion according to the bird's size and figure. In another embodiment, the first assembly structure 11 may well be a tenon and the second assembly structure 17 arrays a series of mortises.

The support section has a first blade 21 and a second blade 22 arranged relatively beside the bottom rib. Both of the blades 21, 22 form an upward inclination less than 180°. In practice, the support section lies under the bird's belly for lifting up the weight.

In some embodiment, the mounting part 10 shapes in rectangular arranged a series of mortises 101 for securing the tracking device A in place. The tracing device A is a wireless communication system equipped with batteries and a storage device, such as WAN, LTE, 5G, WIFI, BT, or a satellite positioning system. In another embodiment, the figure of the mounting part 10 may be, but not limited to, round, triangle or other geographic in shapes. Besides, the tracking device A may be attached on the mounting part 10 by a Velcro.

Moreover, the mounting part 10 can be deployed by a variety of the data collection devices, such as a tracking device A, an image capture device C, or any of the electronic controller similar to an image capture device C.

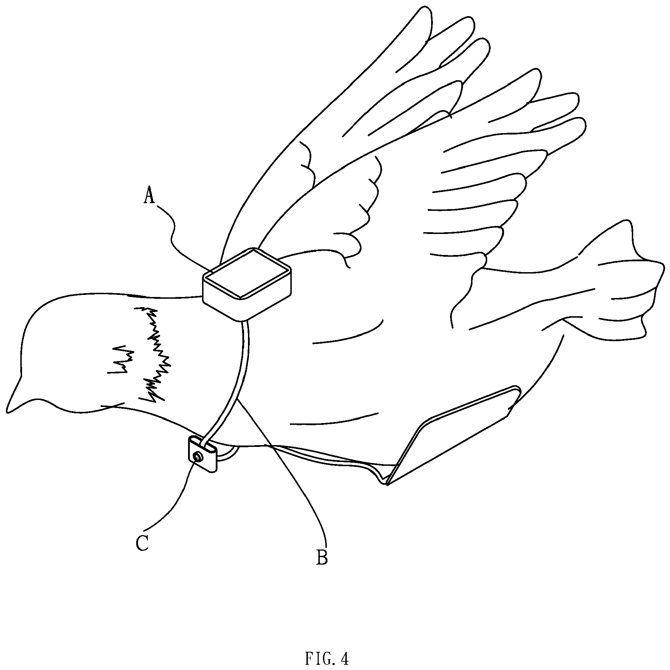

At the beginning of practice shown as the embodiment in FIG. 4, the mounting part 10 is positioned on the bird's back, the front section 13 enclosing the bird's head with the first connecting string 131 on one side of the bird's throat and with the second connecting string 132 on the other side. Then, the first and the second crooked strings 151, 152 surround the bird's chest, and the bottom rib 153 centering the bird's belly between two feet so that the bird's wings and feet can move freely. Finally, the practice of avian girdle is on completion of the third and the fourth adjustable fasteners 171, 172 traversing between two feet, the third adjustable fastener 171 snapping up the first adjustable fastener 111 and the fourth adjustable fastener 172 snapping up the second adjustable fasteners 112.

By putting the avian girdle onto bird's practice, the tracking device A is deployed on the mounting part 10, the image capture device C being engaged with the pedestal 13a, and the tracking device A being communicated to the image capture device C with a signal transmitting wire B. In this way, the bird can carry the tracking device A and the image capture device C at the same time for a flight and transmit the recorded flight trace simultaneously. With the deployment of the tracking device on bird's back and attachment of the image capture device C on bird's throat or chest help a counterweight distribution of the tracking device A and the image capture device C so that the bird can withstand a heavier load; moreover, the design of the avian girdle help to decrease air resistance when flying which meets the requirements of complying the flight dynamic and solving the problem of uneven weight load affecting bird's flying performance caused by an unilateral configuration of the tracking device on foot ring.

## Claims

1. An avian girdle, comprising a frame, **characterized in that**:
a mounting part (10), acting as a saddle for deploying a data collection device and connecting a first assembly structure (11) to a front section (13) in a distance, the front section (13) having an assembly structure, for engaging with an image capture device (C), and a rear section (15), associating the front section (13) and linking a second assembly structure (17) to the first assembly structure (11) in a detachable fashion.

2. The avian girdle of claim 1, wherein the front section (13) includes the first connecting string (131) and the second connecting string (132), both of them arraying in segregation and extending downward from the mounting part (10) as a collar for bird's head passing through, the first connecting string (131) associating the first crooked string (151) of the rear section (15) and the second connecting string (132) associating the second crooked string (152) of the rear section (15).

3. The avian girdle of claim 2, wherein the first crooked string (151) and the second crooked string (152) converge at one end of the bottom rib (153) of the rear section (15) away from the first and the second connecting string (131,132), and the first and the second crooked strings (151,152) form an inclination roughly like a V shape.

4. The avian girdle of claim 1, wherein the data collection device is deployed on the mounting part (10) by way of snapping or bonding.

5. The avian girdle of claim 2, wherein there still are a first blade (21) and a second blade (22) disposed relatively on the bottom rib (153) of the rear section (15), and both of them stretch upward forming an inclination.

6. The avian girdle of claim 3, wherein the second assembly structure (17) stretches upward from one end of the bottom rib (153).

7. The avian girdle of claim 1, wherein either of the first assembly structure (11) or the second assembly structure (17) is a series of mortises, and the other is a tenon

8. The avian girdle of claim 1, wherein the first assembly structure (11) has a first adjustable fastener (111) and a second adjustable fastener (112), and both of them form an inclination.

9. The avian girdle of claim 1, wherein the second assembly structure (17) has a third adjustable fastener (171) and a fourth adjustable fastener (172), and both of them form an inclination.

10. The avian girdle of claim 1, wherein the data collection device is a tracking device (A), an image capture device (C) or a controller.

## Amended claims

### Amended claims in accordance with Rule 137(2) EPC.

1. An avian girdle, comprising a frame, **characterized in that**:
a mounting part (10), acting as a saddle for deploying a data collection device and connecting a first assembly structure (11) to a front section (13) in a distance, the front section (13) having an assembly structure, for engaging with an image capture device (C);
a rear section (15), associating the front section (13) and linking a second assembly structure (17) to the first assembly structure (11) in a detachable fashion;
wherein either of the first assembly structure (11) or the second assembly structure (17) comprises a plurality of mortises is provided alongside the longitudinal direction of the either the first assembly structure (11) or the second assembly structure (17), and the respective other comprises a tenon; and
a first blade (21) and a second blade (22) disposed relatively on the bottom rib (153) of the rear section (15), and both of them stretch upward forming an inclination.

2. The avian girdle of claim 1, wherein the front section (13) includes the first connecting string (131) and the second connecting string (132), both of them arraying in segregation and extending downward from the mounting part (10) as a collar for bird's head passing through, the first connecting string (131) associating the first crooked string (151) of the rear section (15) and the second connecting string (132) associating the second crooked string (152) of the rear section (15).

3. The avian girdle of claim 2, wherein the first crooked string (151) and the second crooked string (152) converge at one end of the bottom rib (153) of the rear section (15) away from the first and the second connecting string (131,132), and the first and the second crooked strings (151,152) form an inclination roughly like a V shape.

4. The avian girdle of claim 1, wherein the data collection device is deployed on the mounting part (10) by way of snapping or bonding.

5. The avian girdle of claim 3, wherein the second assembly structure (17) stretches upward from one end of the bottom rib (153).

6. The avian girdle of claim 1, wherein the first assembly structure (11) has a first adjustable fastener (111) and a second adjustable fastener (112), and both of them form an inclination.

7. The avian girdle of claim 1, wherein the second assembly structure (17) has a third adjustable fastener (171) and a fourth adjustable fastener (172), and both of them form an inclination.

8. The avian girdle of claim 1, wherein the data collection device is a tracking device (A), an image capture device (C) or a controller.
